# EUROPÄISCHE PATENTANMELDUNG

(11) **EP 1 361 387 A2**
(43) Veröffentlichungstag der Anmeldung: **12.11.2003**
(21) Anmeldenummer: 03016856.1
(22) Anmeldetag: 11.03.1999
(51) Int. Cl.: F16L 21/03

(54) **Rohr, insbesondere Kanalisationsrohr, mit einer Ringsicke zur Aufnahme einer Ringdichtung sowie Ringdichtung**

(30) Priorität: 13.06.1998 DE 29810672 U
(62) Teilanmeldung aus: 99104863.8
(71) Anmelder: M.O.L. GUMMIVERARBEITUNG GMBH & Co. KG, D-49377 Vechta (DE)
(72) Erfinder: Lüers, Gregor, 49377 Vechta (DE)
(74) Vertreter: Meyer, Ludgerus A.

(57) **Zusammenfassung**

Die Erfindung betrifft ein Rohr, insbesondere Kanalisationsrohr, mit einem Muffenende mit einer Ringsicke (3) in die eine mit einer Dichtlippe (10) versehene Ringdichtung (4) einsetzbar ist, wobei die Ringdichtung (4) an ihrem der Einschieberichtung eines einzuschiebenden Rohres entgegengerichteten vorderen Ende eine Spannlippe (11) aufweist, die am Vorderende der Ringsicke (3) an die Muffeninnenwand anlegbar ist. Die im wesentlichen rechteckförmige Ringsicke (3) weist eine die Spannlippe (11) abstützende Stufe (7) auf, deren Radius zwischen dem Innenradius des Rohres außerhalb der Ringsicke und dem Radius des Sickengrundes (6) der Ringsicke (3) bemessen ist.

## Beschreibung

Die Erfindung betrifft ein Rohr, insbesondere Kanalisationsrohr, mit einer Ringsicke zur Aufnahme einer Ringdichtung nach dem Oberbegriff des Anspruchs 1, bei dem das Spitzende eines ersten Rohres in das mit einer Ringsicke versehene Muffenende eines zweiten Rohres einsteckbar ist, sowie eine Ringdichtung nach dem Oberbegriff des Anspruchs 5.

Zur Verbindung zweier Rohre, wie Kunststoff-Abwasserrohre, werden üblicherweise Ringdichtungen verwendet, die in Ringsicken des Muffenendes eines Rohres eingesetzt werden. Beim Einschieben des Spitzendes des ersten Rohres legen sich die Dichtlippen der Ringdichtung eng an das erste Rohr an, so daß die Abdichtung gewährleistet ist.

Um die Dichtung bereits bei der Herstellung des Rohres in die Ringsicke einsetzen zu können, sind besondere Maßnahmen erforderlich, um die Unverlierbarkeit der Dichtung in der Ringsicke zu gewährleisten. Eine Möglichkeit besteht darin, die Dichtung mit einer Stahl- oder Kunststoffeinlage zu versehen. Es ist auch bekannt, den Grundkörper der Dichtung relativ starr auszubilden, wobei lediglich die Dichtlippe flexibel gehalten ist.

Aus der EP 0 156 222 B1 ist eine Muffenrohrverbindung mit einem Dichtungsring bekannt, bei der die Dichtung einen massiven Haltebereich aufweist, dessen Rückenfläche an der Ringsicke anliegt, sowie einen verpreßbaren Bereich, der eine durch eine Aufspaltung gebildete Dichtlippe enthält. Die Ringdichtung weist dabei in ihrem Haltebereich einen derartigen Innendurchmesser auf, daß zwischen dem Haltebereich und dem eingeschobenen Spitzende ein Freiraum bleibt, da dieser Bereich nicht kompressibel ist und aufgrund der auftretenden Toleranzen bei den zusammenzusetzenden Rohren dieser in jedem Fall zu überbrücken ist.

Das Einschieben des Spitzendes eines Rohres in die Muffe führt dazu, daß der rückwärtige verpreßbare Bereich der Ringdichtung aufgrund des vorderseitigen Freiraumes zwischen Dichtung und eingeschobenem Rohr eine Verdrehung dieses Bereichs bewirkt, so daß zwischen vorderem massiven Haltebereich und Innenseite der Ringsicke ein offener Freiraum entstehen kann, in den Schmutz oder andere Verunreinigungen eindringen können. Der massive Haltebereich des Dichtringes erlaubt es ferner nicht, größere Toleranzen von Rohren zu überbrücken, so daß sein Einsatzgebiet stark beschränkt ist. Aufgrund der unterschiedlichen Härtegrade des Ringes ist außerdem die Herstellung relativ kostenintensiv.

Eine Firmenschrift der Firma Forsheda Gummitechnik AB, Forsheda, Schweden aus dem Jahre 1976 zeigt eine Dichtung für V-förmige Ringsicken im Muffenende eines Rohres, die zweiteilig ausgebildet ist. Es ist ein Kompressionsbereich vorgesehen, dessen Innendurchmesser kleiner als der Durchmesser eines in das Muffenende einzuschiebenen Rohres ist. Beim Zusammensetzen der Rohre wird die Dichtung soweit zusammengedrückt, daß sie in einen ringförmigen Hohlraum zwischen Dichtkörper und Sickengrund wenigstens zum Teil ausweichen kann. Im hinteren Bereich der Dichtung ist eine Metallverstärkung vorgesehen, um ein Verdrehen der Dichtung beim Einschieben des Spitzendes eines Rohres in die Muffe zu verhindern und damit die Formstabilität der Dichtung zu gewährleisten.

Obgleich diese Dichtung die gewünschte Abdichtfunktion zu erfüllen scheint, weist diese jedoch erhebliche Montagenachteile auf. Die Herstellung der Dichtung aufgrund des erforderlichen Verstärkungselements ist kostenaufwendig und schwer zu handhaben. Dies bedingt auch, daß die Dichtung bereits bei der Heißformung der Muffe darin angesetzt werden muß.

Die vorderseitig abgerundete Ausbildung der Dichtung weist auch erhebliche Nachteile beim Einschieben des Spitzendes eines Rohres in das Muffenende auf. Diese Ausbildung führt leicht dazu, daß Verschmutzungen, die sich bereits im Muffenende befinden können, oder die am Spitzende des einzuschiebenden Rohres vorhanden sind, in den ringförmigen Hohlraum zwischen Dichtung und Sickengrund eindringen können und damit die Wirkung des als Absorptionsraum vorgesehenen Hohlraums aufheben können. Ferner führt diese Ausbildung leicht dazu, daß beim Einschieben des Spitzendes eines Rohres in die Muffe die Dichtung "aufgerollt" wird, wie dies insbesondere bei Kleinstmaß des Muffenendes und Toleranzgrößtmaß der Dichtung auftreten kann, so daß in diesem Fall keine Dichtfunktion gewährleistet ist. Die Verwendung eines Metall-Verstärkungsringes verringert zwar diese Gefahr, jedoch wird dies mit zusätzlichem Kostenaufwand erkauft.

Schließlich ist eine derartig verstärkte Dichtung nur mit erheblichem Aufwand in rechteckförmige Ringsicken einsetzbar.

Aus der DE 43 27 163 A1 ist schließlich eine Rohrverbindung bekannt, bei der die Ringdichtung eine an ihrem der Einschieberichtung eines in die Muffe einzuschiebenden zugewandten Ende an der Muffeninnenwand anliegende Spannlippe aufweist, die insbesondere bei Kleinstmaß der Rohrverbindung in die Ringsicke verschiebbar ist. Sie weist zum Sickengrund hin einen Hohlraum auf, der als Verdrängungsraum für die Spannlippe dienen kann.

Es hat sich herausgestellt, daß unter bestimmten ungünstigen Paarungsverhältnissen der Rohre die Spannlippe sich entweder zwischen den Rohren verklemmt oder soweit verschoben wird, daß Verschmutzungen zwischen Sickengrund und Spannlippe eintreten können.

Ausgehend von der zuletzt genannten Rohrverbindung. liegt der Erfindung die Aufgabe zugrunde, ein Rohr, insbesondere Kanalisationsrohr, mit einem Muffenende mit einer Ringsicke anzugeben, deren Dichtung über große Toleranzbereiche der zu verbindenden Rohre fehlerfrei einsetzbar ist, die kostengünstig herstellbar ist und die Verunreinigungen zwischen Ringdichtung und Innenseite der Ringsicke sicher vermeidet. Der Erfindung liegt ferner die Aufgabe zugrunde, eine Dichtung für ein Rohr mit einer Ringsicke anzugeben, die neben einer guten Abdichtfunktion auch Verschmutzungen des Rohres im Bereich der Dichtung weitgehend vermeidet.

Diese Aufgabe wird durch die im Anspruch 1 angegebene Erfindung gelöst. Vorteilhafte Weiterbildungen der Erfindung sind in Unteransprüchen angegeben.

Gemäß der Erfindung weist bei einem gattungsgemäßen Rohr die im wesentlichen rechteckförmige Ringsicke eine die Spannlippe stützende Stufe auf, deren Radius zwischen dem Innenradius des Rohres außerhalb der Ringsicke und dem Radius des Sickengrundes der Ringsicke bemessen ist.

Durch die Erfindung besteht auch bei Kleinstmaß der Rohrverbindung keine Gefahr der Verklemmung der Spannlippe. Die Verschmutzungsgefahr in der Ringsicke bleibt gebannt. Die stufenförmige Ringsicke beschränkt die Dicke der Dichtung im Bereich der Spannlippe auf die der Spannlippe zukommende Funktion, so daß sich gegenüber bekannten Dichtungen eine Materialersparnis ergibt.

Die Erfindung wird nachstehend anhand eines Ausführungsbeispiels näher erläutert. Es zeigen:
- Fig. 1: eine Ausschnittansicht einer Verbindung zweier Rohre mit in einer Ringsicke eingelegten Ringdichtung,
- Fig. 2: eine vergrößerte Schnittansicht der Verbindung zweier Rohre, und

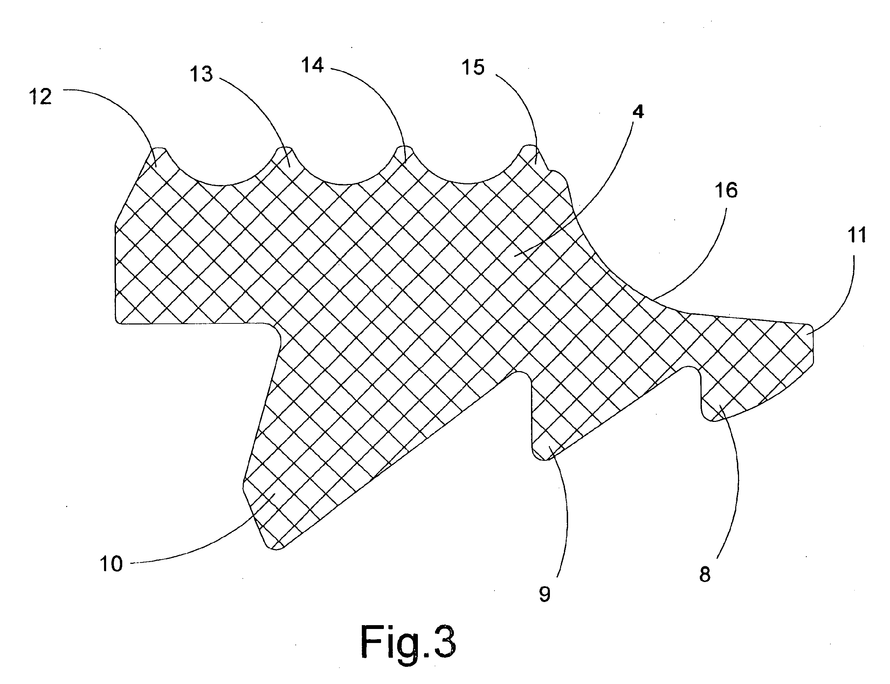

- Fig. 3: einen Querschnitt durch eine Ringdichtung.

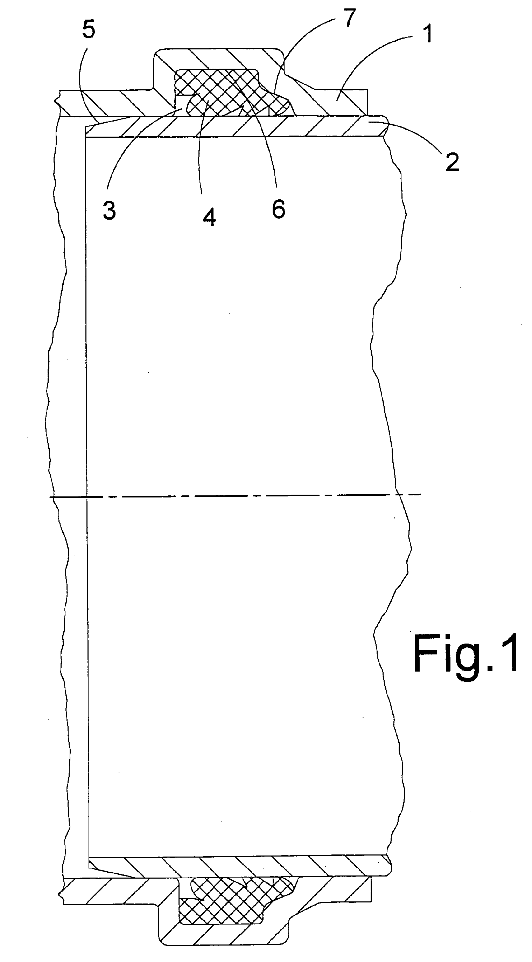

Fig. 1 zeigt das Muffenende 1 eines Rohres, insbesondere Kunststoffrohres, das mit einer Ringsicke 3 versehen ist, in die eine Ringdichtung 4 eingesetzt ist. Zum leichteren Einschieben des Spitzendes 2 des einzuschiebenden Rohres weist dieses an seinem Vorderende eine außenseitige Abschrägung 5 auf.

Die Sicke 3 ist im wesentlichen rechteckförmig gestaltet. Die im Sickengrund 6 liegende Dichtung 4 ist auf ihrer Vorderseite, d.h. gegen die Einschubrichtung des einzuschiebenen Rohres gesehen, mit einer Spannlippe versehen. Diese liegt auf einer Stufe 7 auf, die am Vorderende der Ringsicke 3 ausgebildet ist.

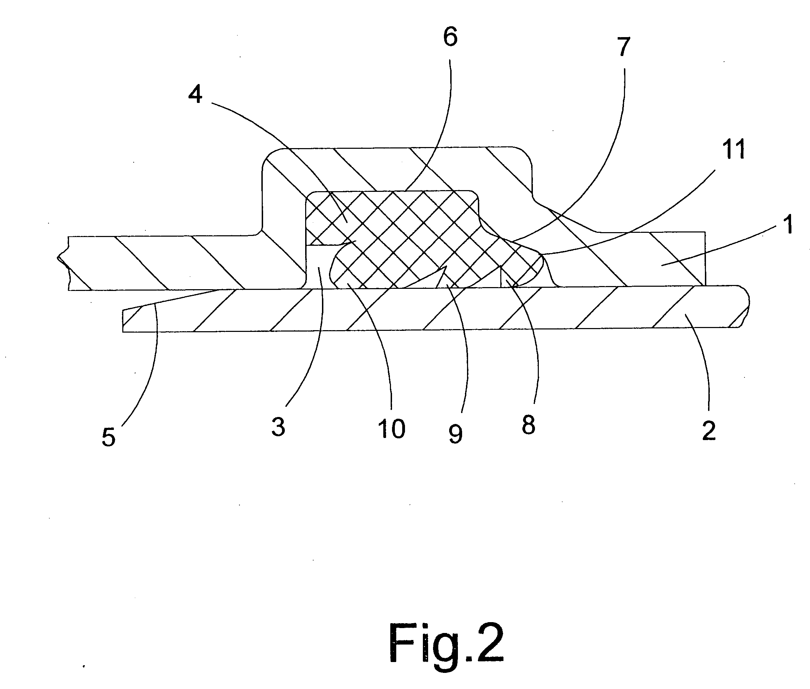

Fig. 2 zeigt eine vergrößerte Ansicht der Darstellung der Rohrverbindung. Obgleich die Ringsicke 3 im wesentlichen rechteckförmig ist und daher auch andere Arten von Dichtungen aufnehmen kann, ist erfindungsgemäß die Ausbildung einer Stufe 7 vorgesehen, die eine Spannlippe 11 der Dichtung 4 abstützt. Im unbelasteten Zustand der Dichtung 4 liegt die Dichtung auf der Stufe 7 nur im Bereich der Spannlippe 11 auf, während sie, wie in Fig. 2 dargestellt, im belasteten Zustand der Kontur der Stufe 7 folgt. Die Stufe 7 ist so bemessen, daß ihr Innenradius vom Vorderende der Dichtung her, d.h. vom Bereich der Spannlippe 11 zum Sickengrund 6 hin zunehmend ausgebildet ist. Die Abschrägung der Stufe verläuft daher in einem spitzen Winkel zur Rohrachse. Je flacher der spitze Winkel ist, um so größer kann die Andruckkraft der Dichtung im Bereich der Spannlippe 11 eingestellt werden. Die nötige Andruckkraft der Spannlippe 11 wird insbesondere durch die der Spannlippe 11 gegenüberliegende Haltelippe 8 erreicht, die von dem einzuschiebenden Spitzende eines Rohres nach außen gedrängt wird und damit die Spannlippe 11 gegen die Stufe 7 andrückt. Da der Andruckbereich der Haltelippe 8 gegenüber dem Andruckbereich der Spannlippe 11 nach rückwärts versetzt ausgestaltet ist, ergibt sich beim Einschieben des Spitzendes eines Rohres eine gewisse Verdrehung des Dichtungsbereichs zwischen Spannlippe 11 und Haltelippe 8, so daß das Material der Dichtung 4 beim Einschieben des Spitzendes vollflächig auf der Stufe 7 zur Anlage kommt. Damit ergibt sich eine hohe Andruckkraft.

Zwischen Haltelippe 8 und Hauptdichtungslippe 10 am rückwärtigen Ende der Dichtung 4 ist vorzugsweise noch eine Abstreiflippe 9 ausgebildet, die der weiteren Erhöhung der Dichtsicherheit der Dichtung dient, insbesondere Verschmutzungen abstreift, die u. U. anderfalls die Dichtfunktion der Hauptdichtlippe 10 behindern würde.

Fi.g 3 zeigt eine Dichtung im unbelasteten Zustand im Querschnitt. Es ist deutlich zu erkennen, daß die Spannlippe 11 die Verlängerung eines Bogens 16 bildet, welcher sich bei Ausbildung eines Drucks auf die Haltelippe 8 begradigt und dann der Kontur der Stufe 7 in der speziellen Ausgestaltung der Ringsicke folgt.

An der Außenseite der Dichtung sind noch Außenlippen 12 - 15 ausgebildet, die der Verankerung und Abdichtung der Dichtung 4 im Sickengrund 6 dienen. Diese werden beim Verbinden zweier Rohre zum Teil zusammengedrückt und ergeben damit eine Dichtfunktion im Bereich des Sickengrundes. Gleichzeitig gleichen sie Toleranzen in den Rohrdurchmessern aus, so daß die Dichtfunktion der Dichtung bei allen zulässigen Rohrpaarungen gewährleistet bleibt.

### Bezugszeichenliste

- 1: Muffenende
- 2: Spitzende
- 3: Ringsicke
- 4: Dichtung
- 5: Abschrägung
- 6: Sickengrund
- 7: Stufe
- 8: Haltelippe
- 9: Abstreiflippe
- 10: Hauptdichtlippe
- 11: Spannlippe
- 12: Außenlippe
- 13: Außenlippe
- 14: Außenlippe
- 15: Außenlippe
- 16: Bogen

## Patentansprüche

1. Dichtung zum Einsetzen in ein mit einer im wesentlichen rechteckförmigen Ringsicke versehenes Muffenende eines Rohres, insbesondere Kanalisationsrohres, welche mit einer vorderseitigen Spannlippe zur Abstützung auf einen Abschnitt des Muffenendes des Rohres versehen ist, **dadurch gekennzeichnet, dass** der Innendurchmesser der unbelasteten Dichtung im Bereich der Spannlippe kleiner als das Durchmesser-Kleinstmaß eines der Dichtung dimensionsmäßig zugeordneten Rohres und größer als der Innendurchmesser des Bereichs der Dichtung ist, der die Ringsicke eines zugeordneten Rohres ausfüllt, wobei die Spannlippe auf einer in der Ringsicke des Rohres ausgebildeten Stufe abstützbar ist.

2. Dichtung nach Anspruch 1, **dadurch gekennzeichnet, dass** die Dichtung (4) im Bereich der Spannlippe (11) eine Haltelippe (8) aufweist, die in Axialrichtung der Dichtung gegenüber der Spannlippe (11) versetzt angeordnet ist.

3. Dichtung nach Anspruch 2, **dadurch gekennzeichnet, dass** zwischen Haltelippe (8) und der Hauptdichtlippe (10) der Dichtung (4) eine Abstreiflippe (9) ausgebildet ist.
